# EUROPEAN PATENT APPLICATION

(11) **EP 4 520 737 A1**
(43) Date of publication of application: **12.03.2025**
(21) Application number: 23915185.5
(22) Date of filing: 27.11.2023
(51) Int. Cl.: C04B 5/06, C04B 28/08, B01D 53/81

(54) **DEVICE AND METHOD FOR CARBON SEQUESTRATION OF STEEL SLAG**

(30) Priority: 24.07.2023 CN 202310911825
(71) Applicant: Institute of Research of Iron and Steel, Jiangsu Province/Sha-Steel, Co. Ltd (CN), Suzhou, Jiangsu 215625 (CN); Zhangjiagang Hongchang Steel Plate Co., Ltd., Suzhou, Jiangsu 215625 (CN); Jiangsu Shagang Group Co., Ltd., Suzhou, Jiangsu 215625 (CN)
(72) Inventor: MAO, Rui, Suzhou, Jiangsu 215625 (CN); ZHU, Zuoqiao, Suzhou, Jiangsu 215625 (CN); WANG, Fei, Suzhou, Jiangsu 215625 (CN); LI, Tao, Suzhou, Jiangsu 215625 (CN)
(74) Representative: Potter Clarkson
(86) International application number: PCT/CN2023/134428
(87) International publication number: WO 2025/020390

(57) **Abstract**

The present application relates to the field of resource utilization of industrial waste, in particular to an apparatus and method for steel slag carbon fixation. The apparatus for steel slag carbon fixation includes an apparatus body, and a spray thrower and a gas outlet arranged at a top of a structure of the apparatus body, a material inlet, a material outlet and a gas inlet are further formed on the apparatus body, a transfer unit is arranged inside the apparatus body, and the transfer unit includes a plurality of transfer mechanisms. The apparatus can feed industrial waste gas containing carbon dioxide into steel slag under a condition that environment humidity is maintained in a range from 80% to 100% so as to implement steel slag carbon fixation. In the present application, a water content of the steel slag in a reaction process of the steel slag and carbon dioxide is maintained by controlling the environment humidity, meanwhile, time of contact between water and the steel slag is reduced, element calcium in the steel slag is prevented from being dissolved out, a water film is not formed on a surface of the steel slag so as not to affect reaction of carbon dioxide and free calcium oxide in the steel slag, and thus the reaction of carbon dioxide and free calcium oxide is enabled to be deeply performed.

## Description

### CROSS-REFERENCE TO RELATED APPLICATIONS

The present application claims priority to Chinese Patent Application No. 202310911825.8, filed to the China Patent Office on July 24, 2023 and entitled "APPARATUS AND METHOD FOR STEEL SLAG CARBON FIXATION", the entire content of which is incorporated herein by reference.

### TECHNICAL FIELD

The present application relates to the field of resource utilization of industrial waste, in particular to an apparatus and method for steel slag carbon fixation.

### BACKGROUND

Steel slag is one of major by-products produced in a steel production process, a large amount of steel slag is produced annually, but 60% of the steel slag is not effectively utilized, so resource utilization of the steel slag is of great significance. Main factors that limit the resource utilization of the steel slag are that the steel slag contains a large amount of unstable free calcium oxide, on the one hand, a content of the free calcium oxide in the steel slag is high, so the steel slag is prone to expansion pulverization and soundness is poor, then a series of quality issues such as pavement expansion and cracking may occur when the steel slag is applied to road engineering, and on the other hand, a reduction effect of the free calcium oxide in the steel slag is unstable and thus is difficult to remain a low level. At present, mainly, calcium carbonate is formed by a reaction of carbon dioxide and the free calcium oxide in the steel slag, which may not only effectively improve the stability of the steel slag and widen the application field of the steel slag, but also reduce emissions of carbon dioxide, thereby achieving double benefits in the aspects of carbon dioxide emission reduction and solid waste resource recovery.

A method for CO₂ fixation and digestion of the free calcium oxide in steel slag powder is disclosed in the prior art, which mainly lies in that soaked steel slag and waste heat smoke containing carbon dioxide undergo a stable reaction in a pulverizer, so as to achieve fixation of carbon dioxide and digestion of the free calcium oxide, however, by means of this method, excessive water remains on a surface of the steel slag to form a water film due to steel slag soaking, which affects contact between carbon dioxide and free calcium oxide in the steel slag, meanwhile, soaking of the steel slag causes dissolving out of other element calcium besides the free calcium oxide, waste water produced after soaking of the steel slag needs to be retreated, so cost of resource utilization increases, and in addition, loss of the element calcium causes reduction of a carbon fixation rate of the steel slag.

### SUMMARY OF THE INVENTION

Therefore, a technical problem to be solved by the present application is to overcome the defects that in the prior art, a water film is formed due to steel slag soaking, then contact between carbon dioxide and free calcium oxide in steel slag is affected, wastewater retreatment cost increases, and loss of element calcium in the steel slag results in a low carbon fixation rate of the steel slag, and thus an apparatus and method for steel slag carbon fixation are provided, which improves the carbon fixation rate of the steel slag.

In one aspect, the present application provides an apparatus for steel slag carbon fixation, including an apparatus body, and a spray thrower and a gas outlet arranged at a top of a structure of the apparatus body, a material inlet, a material outlet and a gas inlet being further formed on the apparatus body, a position of the material inlet being higher than a position of the material outlet, the gas inlet being located between the material inlet and the material outlet, a transfer unit being arranged inside the apparatus body, and the transfer unit including a plurality of transfer mechanisms.

In the other aspect, the present application provides a method for steel slag carbon fixation, including the following steps: feeding industrial waste gas containing carbon dioxide into steel slag under a condition that environment humidity ranges from 80% to 100%.

The industrial waste gas containing carbon dioxide further contains SO₂, and optionally, a volume content of SO₂ ranges from 100 ppm to 300 ppm.

The environment humidity is controlled through a spray amount of spray water.

A feeding amount of the industrial waste gas ranges from 150,000 m³/h to 230,000 m³/h. A feeding amount of steel slag ranges from 1 t/h to 1.5 t/h.

A volume content of CO₂ in the industrial waste gas containing carbon dioxide is greater than or equal to 10%, and optionally, the volume content of CO₂ is greater than or equal to 25%; and a temperature of the industrial waste gas ranges from 100°C to 200°C.

A pressure intensity ranges from 1 atm to 1.5 atm in a reaction process of the steel slag and the industrial waste gas containing carbon dioxide.

Time of contact between the steel slag and the industrial waste gas containing carbon dioxide ranges from 0.5 h to 2 h; and a transfer rate of the steel slag ranges from 0.5 m/min to 1.5 m/min.

A particle diameter of 50% or more of the steel slag is less than or equal to 80µm; before feeding, a water content of the steel slag ranges from 5% to 15%; and water is at least one type of industrial wastewater or reclaimed water.

Steel slag obtained by the apparatus for steel slag carbon fixation provided by the present application or steel slag obtained by the method for steel slag carbon fixation provided by the present application can be applied to building materials or road construction materials.

The technical solutions of the present application have the following advantages.
1. The apparatus for steel slag carbon fixation provided by the present application includes the apparatus body, and the spray thrower and the gas outlet arranged at the top of the structure of the apparatus body, the material inlet, the material outlet and the gas inlet are further formed on the apparatus body, the position of the material inlet is higher than the position of the material outlet, the gas inlet is located between the material inlet and the material outlet, the transfer unit is arranged inside the apparatus body, and the transfer unit includes the plurality of transfer mechanisms. In the present application, water is conveniently sprayed into the apparatus by arranging the spray thrower at the top of the apparatus body, so that the environment humidity in the apparatus meets the requirement, meanwhile, the gas inlet is formed between the material inlet and the material outlet, complete contact between the industrial waste gas and the steel slag fed through the material inlet is facilitated, a situation that the industrial waste gas injected into the apparatus escapes from the gas outlet when not reacting with the steel slag is avoided, further, the present application is provided with the transfer unit formed by the plurality of transfer mechanisms, and reaction time of the steel slag and the industrial waste gas in the apparatus can be ensured by controlling the transfer rate of each transfer mechanism.
2. The method for steel slag carbon fixation provided by the present application includes: feeding the industrial waste gas containing carbon dioxide into the steel slag under the condition that the environment humidity ranges from 80% to 100%. In the present application, the water content of the steel slag in a reaction process of the steel slag and carbon dioxide is maintained by controlling the environment humidity, a contact amount of water and the steel slag is reduced, the element calcium in the steel slag is prevented from being dissolved out, so that the water film is not formed on a surface of the steel slag so as not to affect the reaction of carbon dioxide and free calcium oxide in the steel slag while reaction of the steel slag carbon fixation is complete, and the present application enables the reaction of carbon dioxide and free calcium oxide in the steel slag to be deeply performed by maintaining the environment humidity.
3. By means of the method for steel slag carbon fixation provided by the present application, the industrial waste gas reacting with the free calcium oxide in the steel slag contains sulfur dioxide besides carbon dioxide, the industrial waste gas containing sulfur dioxide and carbon dioxide is fed to react with the steel slag, due to adding of sulfur dioxide, generated sulphurous acid and sulfuric acid can react with a surface compound of the steel slag to form gaps by dissolving, thus carbon dioxide further deeply enters the steel slag to react with free calcium oxide inside the steel slag, and efficiency of carbon fixation is improved.
4. By means of the method for steel slag carbon fixation provided by the present application, by spraying water drops in the process of steel slag carbon fixation, and controlling the transfer rate of the steel slag to be 0.5 m/min to 1.5 m/min and time of contact between the steel slag and the industrial waste gas to be 0.5 h to 2 h, the steel slag can be in full contact with the sprayed water drops, and it is guaranteed that the water content of the steel slag reacting with the industrial waste gas containing carbon dioxide meets the standard so as to improve reaction efficiency of steel slag carbon fixation.
5. The steel slag obtained after carbon fixation is completed by the method for steel slag carbon fixation provided by the present application has a low content of free calcium oxide and can be applied to building materials or road construction materials, the carbon fixation process is simple and convenient, and the industrial waste gas and industrial recycle water can be effectively consumed.

### BRIEF DESCRIPTION OF THE DRAWINGS

In order to more clearly describe specific implementations of the present application or technical solutions in the prior art, the accompanying drawings needed for the description in the specific implementations or in the prior art will be briefly introduced below. Apparently, the accompanying drawings in the following description are some implementations of the present application. Those ordinarily skilled in the art can also obtain other accompanying drawings according to these accompanying drawings without making creative work.

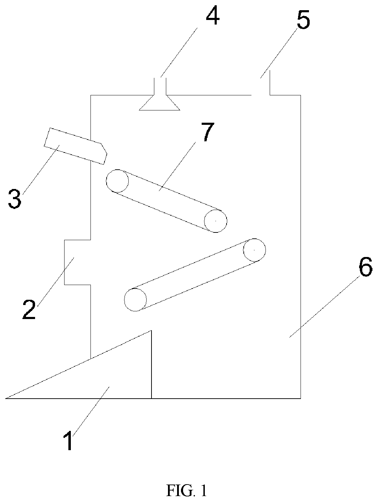

FIG. 1 is a schematic structural diagram of an apparatus for steel slag carbon fixation in the present application.

Reference numerals in the accompanying drawings:
1-material outlet, 2-gas inlet, 3-material inlet, 4-spray thrower, 5-gas outlet, 6-apparatus body, and 7-transfer unit.

### DETAILED DESCRIPTION

The following examples are provided for better further understanding the present application, which are not limited to the preferable implementations and do not constitute a limitation on the content and the protection scope of the present application, and any product the same as or similar to the present application obtained by anybody under the inspiration of the present application or by combining the present application with features in the other prior art falls within the protection scope of the present application.

Where specific experiment steps or conditions are not indicated in the examples can be performed according to operations of conventional experiment steps or conditions described by documents in the art. Whatever reagent or instrument used with no indicated manufacturer may be a conventional reagent product obtained through market purchase.

The present application provides an apparatus for steel slag carbon fixation, as shown in Fig. 1, the apparatus for steel slag carbon fixation includes an apparatus body 6, and a spray thrower 4 and a gas outlet 5 arranged at a top of a structure of the apparatus body 6, a material inlet 3, a material outlet 1 and a gas inlet 2 are further formed on the apparatus body 6, a position of the material inlet 3 is higher than a position of the material outlet 1, the gas inlet 2 is located between the material inlet 3 and the material outlet 1, a transfer unit 7 is arranged inside the apparatus body 6, and the transfer unit 7 includes a plurality of transfer mechanisms. In use, steel slag with a water content meeting a requirement is fed onto the transfer mechanisms through the material inlet 3, an arrangement angle of each transfer mechanism may be adjusted at will so as to guarantee that the steel slag may be spread on the transfer mechanism as thin as possible, the transfer mechanisms drive the steel slag to be transferred, in a transfer process, industrial waste gas containing carbon dioxide or containing carbon dioxide and sulfur dioxide is fed from the gas inlet 2, reclaimed water or the industrial waste gas is sprayed from the spray thrower 4, so environment humidity in the apparatus body 6 is maintained, and the steel slag of which carbon fixation is completed is delivered out via the material outlet 1.

Specifically, a feeding mode of the present application may adopt spiral feeding, transfer feeding, vibrating feeding or other modes, preferably, the vibrating feeding mode, and the steel slag can be spread on the transfer unit 7 more uniformly by maintaining a certain vibration frequency.

Specifically, a discharging mode of the present application may adopt spiral discharging, transfer discharging, vibrating discharging or other modes, preferably, the vibrating discharging mode, which is more beneficial for discharging of the steel slag, too high humidity is avoided, and the steel slag adheres to the material outlet 1.

Specifically, the present application does not limit a type, material, number and arranging position of the transfer mechanisms of the transfer unit 7 as long as the steel slag can be transferred, an angle formed between each transfer mechanism and a horizontal line is set as an inclined angle of the transfer mechanism, the inclined angle of the transfer mechanism may be adjusted at will so as to guarantee that the steel slag can be spread on the transfer mechanism as thin as possible. The transfer mechanism of the present application may be a transfer belt, protrusions are arranged on a belt of each transfer belt and are configured to increase frictional force between the belt and the steel slag, and each transfer belt is arranged at a certain inclined angle and configured to make the steel slag on the last transfer belt fall onto the next transfer belt under an action of gravity. The present application provides an optional example, the transfer mechanisms are two transfer belts, one end of the first transfer belt is arranged at the material inlet and configured to hold steel slag of the material inlet 3, the other end of the first transfer belt is arranged above one end of the second transfer belt, the second transfer belt is configured to hold the steel slag on the first transfer belt and transfer the steel slag to the material outlet 1, and by arranging the two transfer belts, spreading of the steel slag can be better achieved, and thus the steel slag makes full contact with the industrial waste gas.

Specifically, the present application does not limit a type, an arrangement position and an arrangement number of the spray thrower 4 as long as the environment humidity in the apparatus can be maintained in a range from 80% to 100%, and optionally, the spray thrower 4 is a plurality of liquid drop spray throwers which are uniformly arranged at the top of the apparatus so as to guarantee that the environment humidity in the apparatus is uniform.

Before carbon fixation of the steel slag in the examples and the comparative examples of the present application, an initial content of the free calcium oxide is 8%, an initial content of chlorine is 0.015%, and an initial content of sulfur is 0.07%.

### Example 1

This example provides a method for steel slag carbon fixation, and the specific steps and the method are as follows:
1. it is controlled before feeding that 50% of steel slag has a particle diameter being less than or equal to 80 µm, and feeding is performed under a condition of guaranteeing that a water content of the steel slag is 10%, where the water content of the steel slag is controlled by spraying water to the steel slag.
2. A feeding amount of the steel slag is 1 t/h, and an inclined angle of each transfer mechanism is controlled to be 15°.
3. The humidity in the apparatus is maintained to be 80% by continuously spraying reclaimed water drops into the apparatus, meanwhile, the industrial waste gas containing CO₂ is blown in, a volume proportion of CO₂ in the industrial waste gas containing CO₂ is greater than or equal to 25%, an injection rate of the industrial waste gas is 150,000 m³/h, a temperature of the industrial waste gas is 150°C, and a pressure intensity of the apparatus body is 1.5 atm.
4. A transfer rate of the transfer mechanism is controlled to be 1 m/min, so running time of the steel slag in the apparatus is 1 h, namely, the time of contact between the steel slag and the industrial waste gas in the apparatus body is 1 h.

### Example 2

This example provides a method for steel slag carbon fixation, and the specific steps and the method are as follows:
1. it is controlled before feeding that 70% of steel slag has a particle diameter being less than or equal to 80 µm, and feeding is performed under a condition of guaranteeing that a water content of the steel slag is 5%, where the water content of the steel slag is controlled by spraying water to the steel slag.
2. A feeding amount of the steel slag is 1.5 t/h, and an inclined angle of each transfer mechanism is controlled to be 25°.
3. The humidity in the apparatus is maintained to be 100% by continuously spraying industrial wastewater drops into the apparatus, meanwhile, the industrial waste gas containing CO₂ is blown in, a volume proportion of CO₂ in the industrial waste gas containing CO₂ is greater than or equal to30%, an injection rate of the industrial waste gas is 200,000 m³/h, a temperature of the industrial waste gas is 200°C, and a pressure intensity of the apparatus body is 1 atm.
4. A transfer rate of the transfer mechanism is controlled to be 1.5 m/min, so running time of the steel slag in the apparatus is 2 h, namely, the time of contact between the steel slag and the industrial waste gas in the apparatus body is 2 h.

### Example 3

This example provides a method for steel slag carbon fixation, and the specific steps and the method are as follows:
1. it is controlled before feeding that 50% of steel slag has a particle diameter being less than or equal to 80 µm, and feeding is performed under a condition of guaranteeing that a water content of the steel slag is 10%, where the water content of the steel slag is controlled by spraying water to the steel slag.
2. A feeding amount of the steel slag is 1 t/h, and an inclined angle of each transfer mechanism is controlled to be 15°.
3. The humidity in the apparatus is maintained to be 80% by continuously spraying reclaimed water drops into the apparatus, meanwhile, the industrial waste gas containing CO₂ is blown in, a volume proportion of CO₂ in the industrial waste gas containing CO₂ is greater than or equal to 25%, a volume content of SO₂ is 150 ppm, an injection rate of the industrial waste gas is 150,000 m³/h, a temperature of the industrial waste gas is 150°C, and a pressure intensity of the apparatus body is 1.5 atm.
4. A transfer rate of the transfer mechanism is controlled to be 1 m/min, so running time of the steel slag in the apparatus is 1 h, namely, the time of contact between the steel slag and the industrial waste gas in the apparatus body is 1 h.

### Example 4

This example provides a method for steel slag carbon fixation, and the specific steps and the method are as follows:
1. it is controlled before feeding that 50% of steel slag has a particle diameter being less than or equal to 80 µm, and feeding is performed under a condition of guaranteeing that a water content of the steel slag is 15%, where the water content of the steel slag is controlled by spraying water to the steel slag.
2. A feeding amount of the steel slag is 1.2 t/h, and an inclined angle of each transfer mechanism is controlled to be 15°.
3. The humidity in the apparatus is maintained to be 90% by continuously spraying industrial wastewater drops into the apparatus, meanwhile, the industrial waste gas containing CO₂ is blown in, a volume proportion of CO₂ in the industrial waste gas containing CO₂ is greater than or equal to 10%, a volume content of SO₂ is 250 ppm, an injection rate of the industrial waste gas is 230,000 m³/h, a temperature of the industrial waste gas is 100°C, and a pressure intensity of the apparatus body is 1.2 atm.
4. A transfer rate of the transfer mechanism is controlled to be 0.5 m/min, so running time of the steel slag in the apparatus is 0.5 h, namely, the time of contact between the steel slag and the industrial waste gas in the apparatus body is 0.5 h.

### Example 5

This example provides a method for steel slag carbon fixation, and the specific steps and the method are the same as Example 3 and have a difference from Example 3 that a volume content of SO₂ in the industrial waste gas is 300 ppm.

### Example 6

This example provides a method for steel slag carbon fixation, and the specific steps and the method are the same as Example 1 and have a difference from Example 1 that control over a water content of fed steel slag is implemented through soaking.

### Example 7

This example provides a method for steel slag carbon fixation, and the specific steps and the method are as follows:
it is controlled before feeding that 70% of steel slag has a particle diameter being less than or equal to 80 µm, and feeding is performed under a condition of guaranteeing that a water content of the steel slag is 5%, where the water content of the steel slag is controlled by spraying water to the steel slag, a structure shown in FIG. 1 is adopted, the steel slag with the water content meeting a standard is transferred onto the transfer mechanisms through a material inlet 3 according to a feeding rate of the steel slag being 1 t/h, the transfer mechanisms are two transfer belts, inclined angles of the two transfer belts are controlled to be 25°, the steel slag on the material outlet 1 can be uniformly spread on the transfer belts, meanwhile, the steel slag on the last transfer belt falls onto the next transfer belt under an action of gravity, the steel slag is transferred in the apparatus body 6, at the same time, the spray thrower 4 continuously sprays reclaimed water drops into the apparatus body 6 so as to maintain humidity in the apparatus body 6 to be 100%, meanwhile, the gas inlet 2 blows industrial waste gas containing CO₂ into the apparatus body 6, a proportion of CO₂ in the industrial waste gas containing CO₂ is greater than or equal to15%, an injection rate of the industrial waste gas is 150,000 m³/h, a transfer rate of each transfer belt is controlled to be 1.5 m/min, running time of the steel slag in the apparatus body 6 is 2 h, and the steel slag after carbon fixation is completed is discharged through the material outlet 1.

### Comparative example 1

This comparative example of the present application provides a method for steel slag carbon fixation, and the specific steps and the method are the same as Example 1 and have a difference from Example 1 that environment humidity in the apparatus for steel slag carbon fixation is maintained to be 60%.

### Comparative example 2

This comparative example of the present application provides a method for steel slag carbon fixation, and the specific steps and the method are the same as Example 1 and have a difference from Example 1 that spraying is not performed in a process of steel slag carbon fixation.

### Experimental example

A content of free calcium oxide, a content of chlorine and a content of sulfur in the steel slag after being treated by the methods for steel slag carbon fixation in Examples 1 to 5 and Comparative examples 1 to 2 are tested, a test method adopts YB/T140-2009 *Method for chemical analysis of steel slag,* and test results are shown in Table 1.

Table 1 Test results of steel slag after being treated by the methods for steel slag carbon fixation in Examples 1 to 5 and Comparative examples 1 to 2

| | Content % of free calcium oxide | Content % of chlorine | Content % of sulfur | Conversion ratio % of free calcium oxide |
|---|---|---|---|---|
| Example 1 | 2.3 | 0.022 | 0.05 | 71.3 |
| Example 2 | 2.1 | 0.02 | 0.05 | 73.8 |
| Example 3 | 1.4 | 0.021 | 0.08 | 82.5 |
| Example 4 | 1.9 | 0.019 | 0.1 | 76.3 |
| Example 5 | 3 | 0.014 | 0.05 | 62.5 |
| Comparative example 1 | 4 | 0.015 | 0.06 | 50 |
| Comparative example 2 | 4.2 | 0.011 | 0.06 | 47.5 |

It may be seen that the content of the free calcium oxide, the content of chlorine and the content of sulfur in the steel slag after being treated by the methods for steel slag carbon fixation in Examples 1 to 5 of the present application conform to regulations for chemical components in steel slag powder in a national standard GB/T20491-2017, and as the content of the free calcium oxide in the steel slag treated by the methods is far less than the regulated standard, the steel slag produced by the methods also has wider application potential.

Apparently, the above examples are merely examples for clear description, but not for limiting the implementations. Those ordinarily skilled in the art can also make modifications or variations in other different forms based on the above description. All implementations do not need to be and cannot be exhaustively cited here. Apparent modifications or variations derived from this still fall within the protection scope of the present disclosure.

## Claims

1. An apparatus for steel slag carbon fixation, comprising an apparatus body (6), and a spray thrower (4) and a gas outlet (5) arranged at a top of a structure of the apparatus body (6), a material inlet (3), a material outlet (1) and a gas inlet (2) being further formed on the apparatus body (6), a position of the material inlet (3) being higher than a position of the material outlet (1), the gas inlet (2) being located between the material inlet (3) and the material outlet (1), a transfer unit (7) being arranged inside the apparatus body (6), and the transfer unit (7) comprising a plurality of transfer mechanisms.

2. A method for steel slag carbon fixation, comprising the following step:
feeding industrial waste gas containing carbon dioxide into steel slag under a condition that environment humidity ranges from 80% to 100%.

3. The method for steel slag carbon fixation according to claim 2, wherein the industrial waste gas containing carbon dioxide further contains SO₂, and optionally, a volume content of SO₂ ranges from 100 ppm to 300 ppm.

4. The method for steel slag carbon fixation according to claim 3, wherein the environment humidity is controlled through a spray amount of spray water.

5. The method for steel slag carbon fixation according to claim 4, wherein a feeding amount of the industrial waste gas ranges from 150,000 m³/h to 230,000 m³/h; and/or
a feeding amount of steel slag ranges from 1 t/h to 1.5 t/h.

6. The method for steel slag carbon fixation according to claim 5, wherein a volume content of CO₂ in the industrial waste gas containing carbon dioxide is greater than or equal to 10%, and optionally, the volume content of CO₂ is greater than or equal to 25%; and/or
a temperature of the industrial waste gas ranges from 100°C to 200°C.

7. The method for steel slag carbon fixation according to claim 6, wherein a pressure intensity ranges from 1 atm to 1.5 atm in a reaction process of the steel slag and the industrial waste gas containing carbon dioxide.

8. The method for steel slag carbon fixation according to any one of claims 2 to 7, wherein time of contact between the steel slag and the industrial waste gas containing carbon dioxide ranges from 0.5 h to 2 h; and/or
a transfer rate of the steel slag ranges from 0.5 m/min to 1.5 m/min.

9. The method for steel slag carbon fixation according to claim 8, wherein a particle diameter of 50% or more of the steel slag is less than or equal to 80 µm; and/or
before feeding, a water content of the steel slag ranges from 5% to 15%; and/or
water is at least one type of industrial wastewater or reclaimed water.

10. Application of steel slag obtained by the apparatus for steel slag carbon fixation according to claim 1 or steel slag obtained by the method for steel slag carbon fixation according to any one of claims 2 to 9 in building materials or road construction materials.
